(19) Europäisches Patentamt

European Patent Office

Office européen des brevets

(11) Publication number: **0 141 499**
**A1**

# (12) EUROPEAN PATENT APPLICATION

(21) Application number: 84305943.7

(22) Date of filing: 30.08.84

(51) Int. Cl.⁴: **G 11 B 21/10**
**G 11 B 5/56**

(30) Priority: 31.08.83 US 528292
31.08.83 US 528291

(43) Date of publication of application:
15.05.85 Bulletin 85/20

(84) Designated Contracting States:
BE DE FR GB IT NL SE

(71) Applicant: MEMOREX CORPORATION
San Tomas at Central Expressway
Santa Clara California 95052(US)

(72) Inventor: El-Sadi, Ashraf Ibrahim
1134 Roewill Drive
San Jose California 95117(US)

(72) Inventor: Berti, Eugenio
6529 Mojave Drive
San Jose California 95120(US)

(74) Representative: Bridge-Butler, Alan James et al,
G.F. REDFERN & CO. Marlborough Lodge 14 Farncombe
Road
Worthing West Sussex BN11 2BT(GB)

(54) Disk drive servo techniques.

(57) Shown is a disk drive arrangement with servomechanism for controlling (thin-film) head position, etc.; the servo having a disk face dedicated to servo tracks, rendered in "Quad" code, with special timing indicia to separate position indicia.

A feature is a technique for deriving and using "offset" values for an array of servo tracks.

FORWARD
CARRIAGE MOVING WITH CONSTANT SPEED

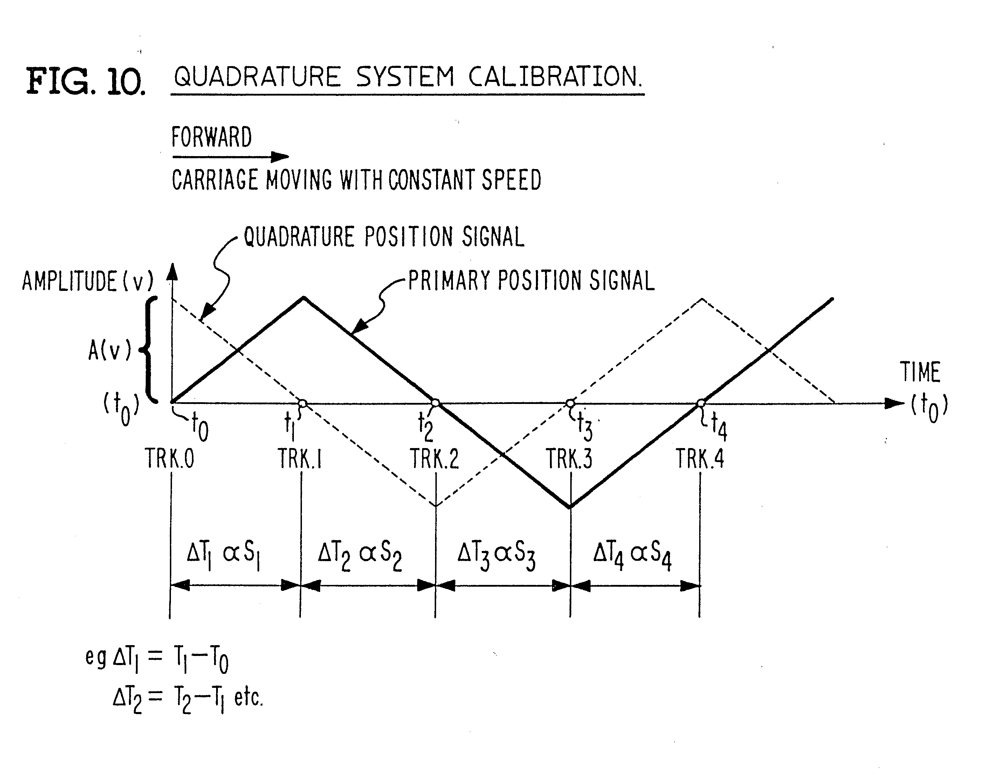

FIG. 10. QUADRATURE SYSTEM CALIBRATION.

$$eg \; \Delta T_1 = T_1 - T_0$$
$$\Delta T_2 = T_2 - T_1 \; etc.$$

Croydon Printing Company Ltd.

- 1 -

## DISK DRIVE SERVO TECHNIQUES

The present invention relates to methods and associated apparatus for positioning transducers over a selected track on associated moving disk surfaces; more particularly, it relates to controlling servomechanisms for such purposes, particularly by developing "offset" values for individual servo tracks.

--Background, features:

Workers are familiar with the use of servo tracks, recorded on moving disks, recovered from the disk by a transducer, and having been recovered, being decoded to give indication of the positional deviation of the transducer from a central position, is well known as a method for finding specific locations or benchmarks on the moving disk, and thereby, reducing the positional errors encountered in the placing of a head over the disk, or in bringing the disk itself into some registration. The method has been used to position reading and writing transducers over other moving media. U.S. Pat. No. 3,691,453 to Mueller shows such a system, as does U.S. 4,380,033 to Bacamia.

Workers recognize that various kinds of servo tracks have been used, depending on the application; ranging from "dedicated" tracks, containing nothing but position information, to signal storage tracks, with servo information interspersed among stored data signals, to data storage tracks which themselves provide servo information where special means are provided to interpret the servo-signals.

Various forms of servo readback signals are also known. One is the sophisticated, two element so-called "tribit" track (e.g., taught by Mueller in U.S. 3,691,453).

The Mueller system postulates a disk with a servo track, a transducer for picking up two position-indication signals from the servo track, a servo for positioning the transducer, and a feedback circuit with a two-channel demodulator for separating the two position indicating signals, comparing them, and responsively generating a feedback signal to the servo. As the transducer approaches and crosses the servo track, the position-indicating signals change, altering the comparator signal to in turn, modify the servo signal.

For these and other reasons, it is usually desirable to provide means for enhancing the precision of the servo signals. This teaching is so oriented.

Here taught is a servo signal format especially apt for use with thin film magnetic R/W transducers and with a "Quad" type positioning code. Among other advantages, this will be seen to enhance linearity

- 3 -

of servo response and to help reduce error due to servo-track offset (e.g., eliminating tail-overshoot, using "timing" signals to isolate position signals).

--Brief Description of the Drawings:

These and other features and advantages of the present invention will be appreciated by workers as they become better understood by reference to the following detailed description of the present preferred embodiments which should be considered in conjunction with the accompanying drawings, wherein like reference symbols denote like elements:

FIG. 1 is a very schematic side view of a disk file with actuators;

FIG. 1A shows, very generally and schematically, the related servomechanism-control elements for one servo disk (FIG. 12 shows related servo control elements more particularly);

FIG. 2 is a chart of head-disk actuator zones;

FIG. 3 is a plot of exemplary servo timing signals, some being explained in FIG. 4;

FIG. 5 is a block diagram of servo control features in the preferred disk drive, while FIGS. 6, 7, 8 and 9 particularize, respectively, the position servo, access servo, automatic gain control and phase locked loop aspects thereof;

FIG. 10 is a representative plot of servo position signals; and

FIG. 11 is a block diagram of a preferred "offset calibration" system herefor.

- 4 -

FIG. 12 is a "flow chart" showing implementation of such calibration.

## Description of the Preferred Embodiment

--General description, background:

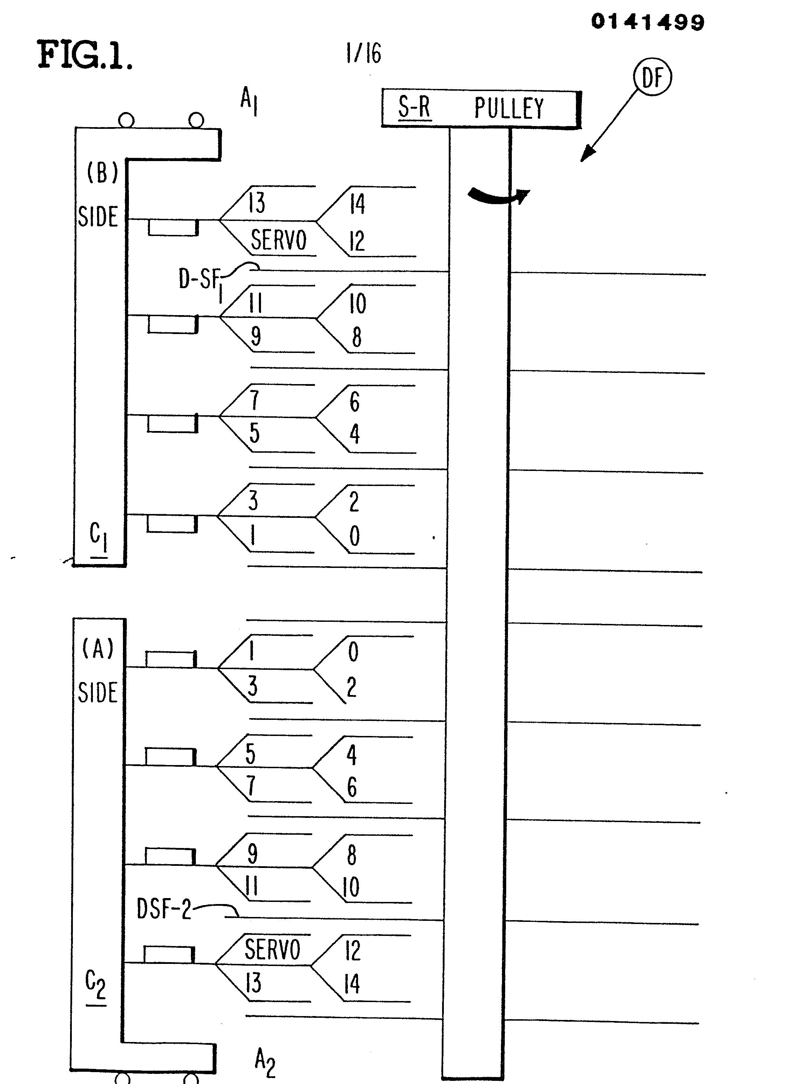

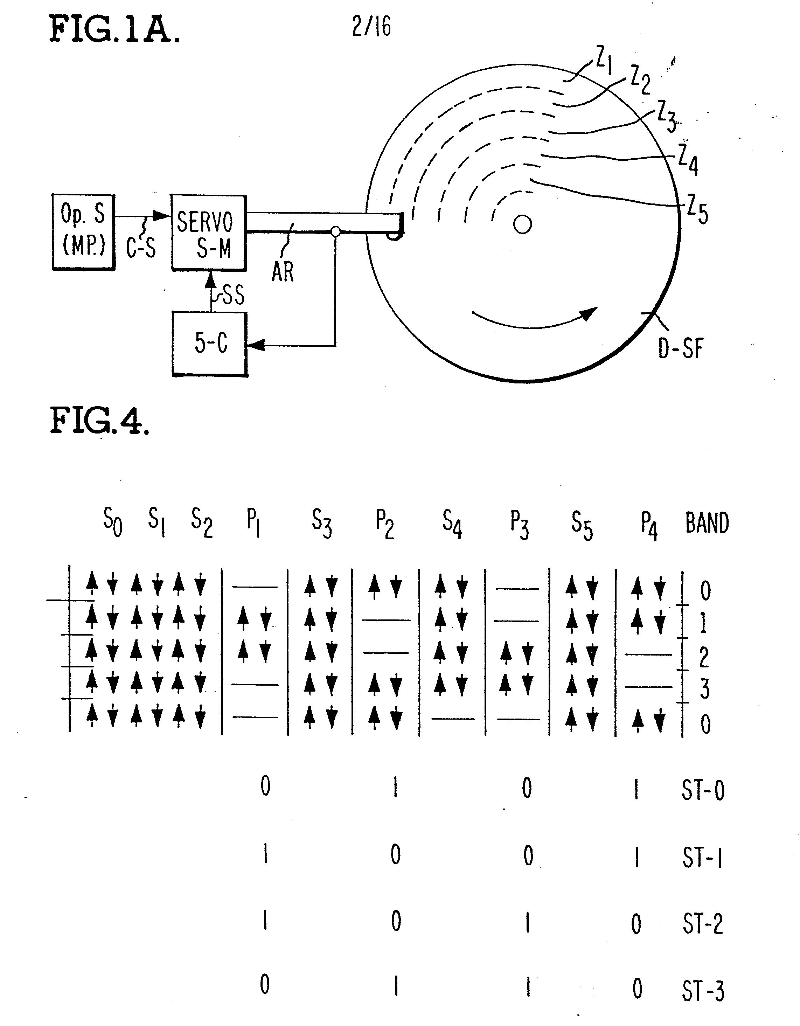

FIG. 1 schematically illustrates a disk file (magnetic records) constructed as known and according to principles of this invention. This, and other devices discussed herein, will generally be understood as constructed and operating as presently known in the art, except where otherwise specified. And, except as otherwise specified, all materials, methods and devices and apparatus herein will be understood as implemented by known expedients and according to present good practice.

--Disk File (FIG. 1):

For present purposes, it will be assumed that a subject disk file DF (FIG. 1) is served by two like actuator arrays; i.e., by arrays $A_1$ and $A_2$, each comprising an array of data transducers (#1 through #14 shown) plus a servo transducer. Each array is carried by a respective common translation means (see carriages $C_1$, $C_2$, etc.) as well known in the art.

FIG. 1A indicates, in very general block diagram form, a typical servo control arrangement as here contemplated, wherein a known servo unit S-M will be understood as translating a related magnetic servo transducer mounted on associated arm AR across various servo tracks on the surface of magnetic disk surface $D-SF_1$ (see also FIG. 1). Workers will understand that servo data is stored along concentric servo tracks on surface D-SF (here, assume four groups, or zones, of tracks: $Z_1$, $Z_2$, $Z_3$, $Z_4$; plus the usual "guard bands" and other dedicated portions of DSF, as well known in the art).

The disk (DF, FIG. 1) will be understood as conventionally rotated during operation (see arrows, pulley S-R in FIG. 1). Each servo track is concentric with a respective "data track". Information (servo) is written on, and recovered from, the servo tracks via the indicated magnetic transducer, whose radial position is controlled by servo S-M as workers understand. This transducer thus can provide servo output signals sa; these may be fed to servo control means S-C (details below) which may responsively generate feedback servo control signals ss applied to control the servo-mechanism S-M. The servo mechanism S-M may also be controlled by signals c-s from the disk file controller (operating system Op.S. portions of related disk file microprocessor -- see below):

.--General Concept of the Disk File Servo:

The head positioning servo-mechanism of the disk file will operate to perform three main functions:

1. Access the heads to the required track in minimum time;

2. Maintain the position of the recording heads exactly over the track-center with minimum displacement errors, despite the presence of disturbances; and

3. Generate an interface servo clock constantly locked to disk position and with minimum jitter -- this used to write data on the disk.

These functions require continuous position information in both axial and lateral directions. We dedicate a servo head and associated (disk) servo-surface for the position information of each actuator array (see $A_1$, $A_2$ arrays, FIG. 1 surfaces $DSF_1$, $DSF_2$).

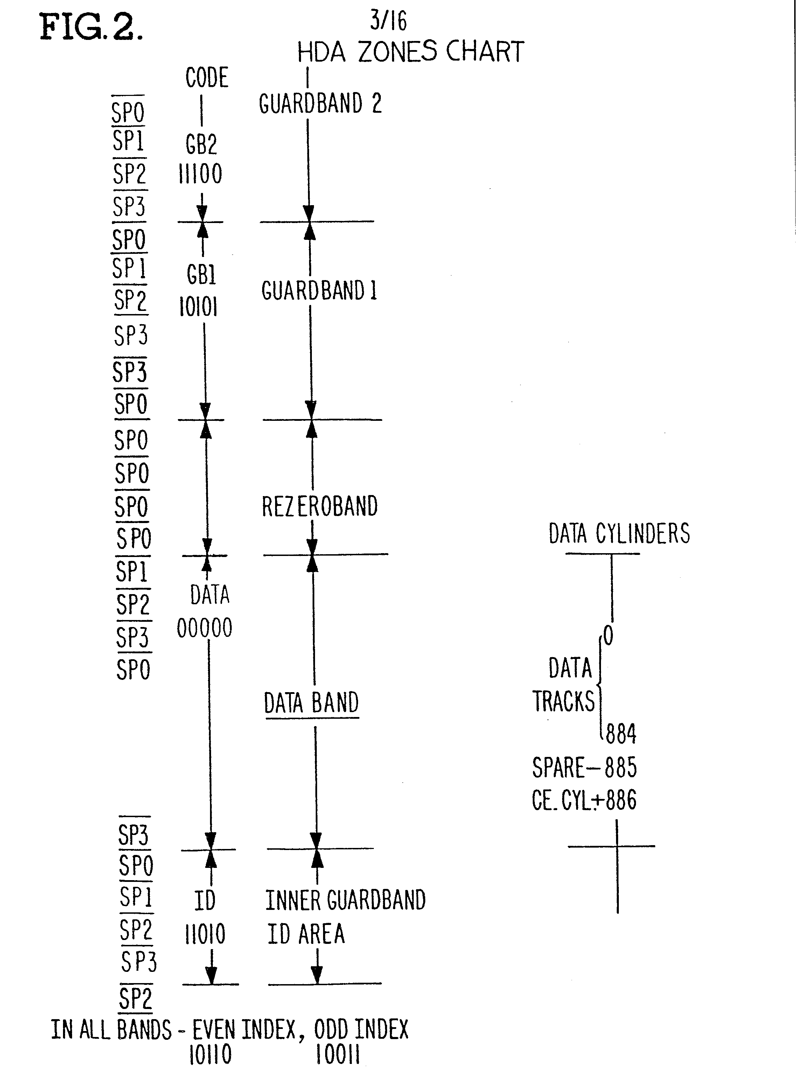

--<u>Servo Surface Description</u> (FIG. 2):

The servo surface is used as a geometrical and timing reference for all other surfaces of the disk module. The servo surface provides the means to implement (1) Head positioning and track following; (2) Write timing (Write Clock); (3) Index sensing; and (4) Rotational position sensing.

--<u>Rotational Speed</u>:

For the following timing relationships, a nominal rotational speed of 3600 rpm is assumed.

<u>Servo Frame Interval</u>. Each recorded servo band is divided into 6216 equal intervals, called servo frame intervals. Each interval corresponds in time to eight data bytes on any data track and is 2.681 us, nominal.

Each servo frame consists of six sync areas and four position areas. The first sync area defines the beginning of the servo frame.

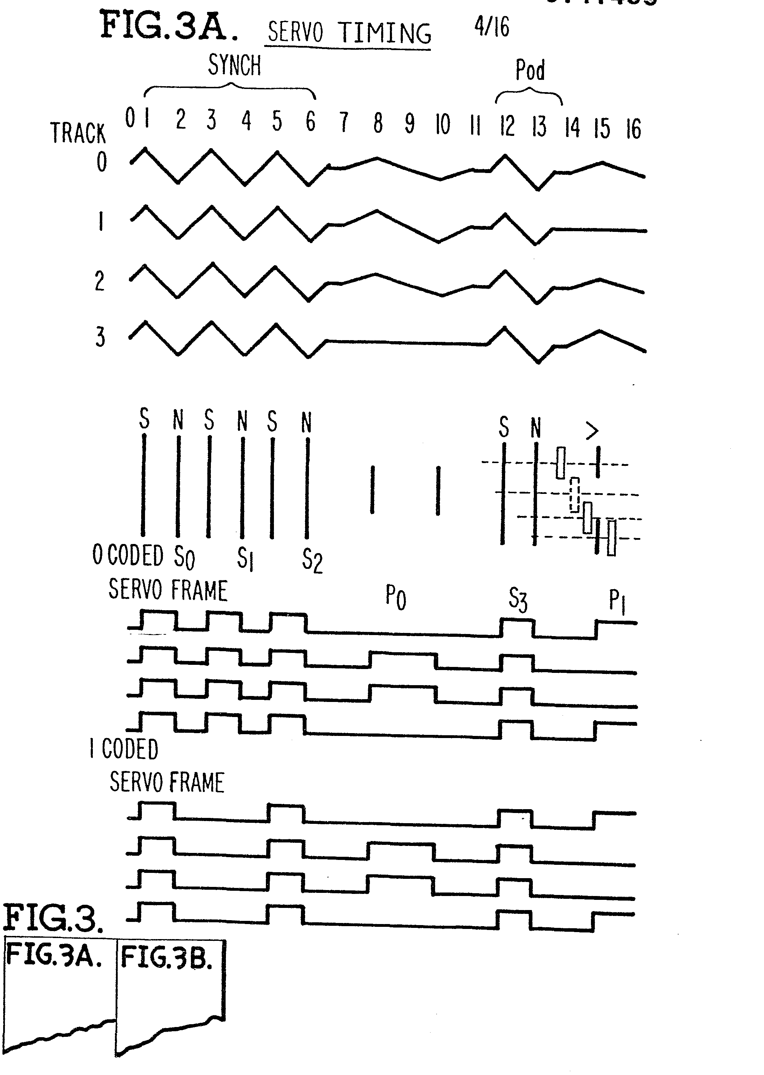

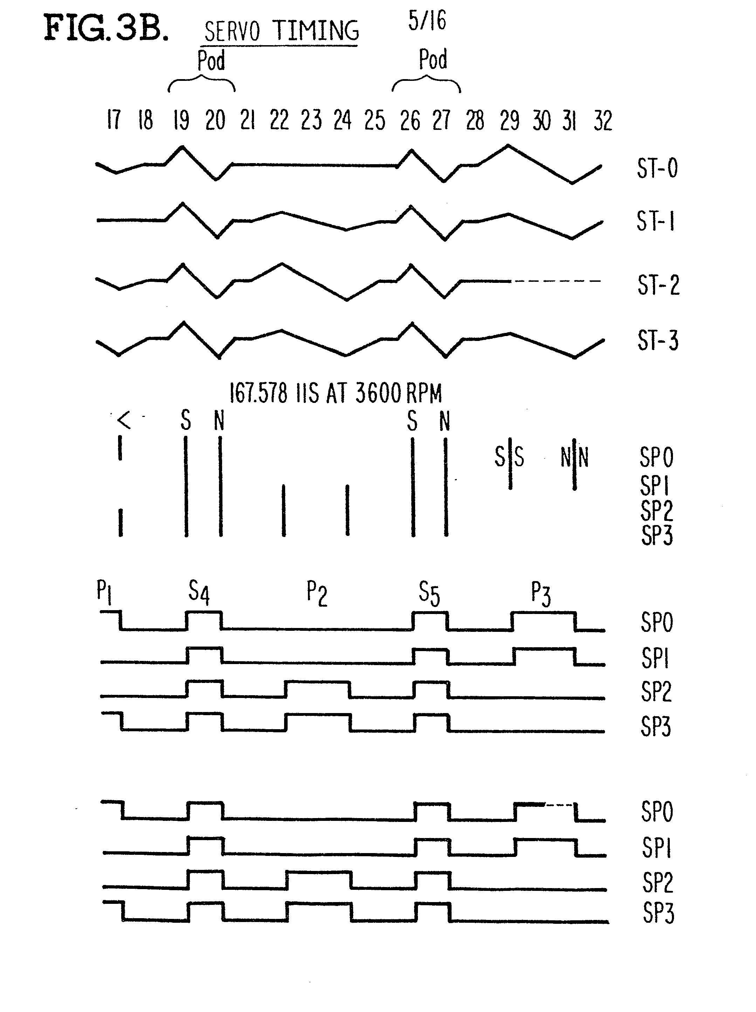

Each "0-coded" servo frame has a sync pulse in each of the six sync areas. An 0-coded servo frame is decoded as as a zero by the guardband detectors (see FIG. 3).

Each "1-coded" servo frame is exactly like the 0-coded servo frame of the same servo band, except that it is missing the second sync pulse. A 1-coded servo frame is decoded as a one by the guardband detectors (see FIG. 3).

<u>Servo Track</u>. A servo track is defined as the track upon which the servo head centers itself. The servo track is the boundary between two recorded servo bands.

The servo tracks are numbered from the OD radially-inward towards the ID; servo tracks 000 through 958 corresponding to the 959 data tracks. Each even-numbered servo track is preceded by a SP0- or SP2-band, and each odd-numbered servo track is preceded by a SP1- or SP3-band. (See FIG. 2 re band layout.)

Each servo band consists of 6216 servo frames made up of six sync areas and four position areas, as shown in FIG. 3. Each position area is 2/32T wide. Each sync area is 1/32T wide, where T is the period of the servo frame.

The servo frames have five or six sync pulses in the sync areas (as defined elsewhere).

Servo Pattern #ST-0: is a band consisting of 6216 frames with position pulses in the position areas that begin at 15/32T and 29/32T (See FIG. 3).

Servo Pattern #ST-1: is a band consisting of 6216 frames with position pulses in the position areas that begin at 8/32T and 29/32T.

Servo Pattern #ST-2: is a band consisting of 6216 frames with position pulses in the position areas that begin at 8/32T and 22/32T.

Servo Pattern #ST-3: is a band consisting of 6216 frames with position pulses in the position areas that begin at 15/32T and 22/32T.

The relationship between the dibit pattern and disk magnetization polarity is shown in FIG. 3. Combination of two servo patterns results in the "On Track" read signal.

Thus, each servo band is recorded into 6216 intervals. Each interval, called a servo frame, corresponds in time to eight data bytes (2.681 us).
Each servo frame divides into six sync areas and four
position areas, in a "quadrature" pattern. The servo
track is the center of two servo "bands", with a nominal
spacing between the servo tracks of 1240.7 ± 15 u inches.

HDA (each face DFS) is divided into 5 zones.
In each zone the servo bands are written in sequence
SP0, SP2, SP3, except in the rezero zone, where it is
written SP0, SP0, SP0, SP0.

1. Guard Band 2
2. Guard Band 1
3. Rezero Zone
4. Data Area
5. I.D. Area

A servo frame is coded "1" if the "second" sync
pulse is missing. "Even/Odd" indexes are written on all
servo bands with five frames width, once per band and
spaced evenly around the band. "Index" determines the
beginning of the track. Thus:

Even Index Code:  10110

Odd Index Code:  10011

Inner and outer guard bands are coded by 5 servo
frames every 74 frames around their servo bands, as
follows:

GB1 Code  10101
GB2 Code  11100
ID Area Code  11010

Usable "customer cylinders" for data recording
are cylinders 0 to 884 (#885 is a spare and #886 a C.E.
cylinder, see FIG. 2).

--Servo Head Positions and Servo Track Geometry:

Line of Access and Alignment of Servo Head. The
read-gap of the servo head moves radially along a line through the axis of disk rotation. (cf. with offset within ± .005 inch, from the outermost to innermost track.)

Data Track Centerline: is given by the servo head position on the line of access for which the read signal contains equal amplitudes of the positive peaks of two servo patterns. This read signal is produced by adjacent servo bands (see FIG. 3).

Specific servo tracks are at the locations listed below. (Given are radial distances from the centerline of the spindle for "on track" locations.)

Servo Track Spacing (S): Nominal spacing S is about 0.001241 here, lying between the centerlines of the servo tracks along the line of access. Spacing S is also the nominal spacing between the data track centerlines along the line of access.

Servo Track Numbering: The centerline of the recorded servo bands are spaced nominally halfway between the track centerlines. Therefore, track centers correspond to having the servo head travel on the line between servo bands. These tracks are numbered from the location of track 000 sequentially toward the center of rotation.

Data Zone: The data zone contains 886 bands of a repeating pattern SP0, SP1, SP2 and SP3 servo patterns from band 000 to 886.

Rezero Zone: The rezero zone contains 4 bands, having servo pattern 0.

Guardband Pattern No. 1: The pattern for Guardband No. 1 consists of a combination of five 1-coded and 0-coded servo frames encoding 10101. Each 0-coded servo frame represents "0" and each 1-coded servo frame represents "1". (See FIG. 3.)

Outer Guardband Zone: The outer guardband contains 120 bands of a repeating pattern SP0, SP1, SP2 and SP3. Each band contains Guardband Pattern No. 2 at 74-frame intervals after each index pattern. (See FIG. 2.)

Guardband Pattern No. 2: The pattern for Guardband No. 2 consists of a combination of five 1-coded and 0-coded servo frames encoding 11100. Each 0-coded servo frame represents "0" and each 1-coded servo frame represents "1". (See FIG. 3.)

Inner Guardband Zone: The inner guardband contains 139 bands, sequencing through the four servo patterns. Each band contains ID Guardband pattern at 74-frame intervals after each index pattern. (See FIG. 2.)

Inner Guardband Pattern: The pattern for the Inner Guardband consists of a combination of five 1-coded and 0-coded servo frames including 11010. Each 0-coded servo frame represents "0" and each 1-coded frame represents "1". (See FIG. 3.)

Index: Each physical track has two indexes. The "even" index is the point which defines the beginning and the end of a track.

Index Pattern: Each index consists of a combination of five 1-coded and 0-coded servo frames encoding either: 10110 for an even index, or 10011 for an odd index. Each 0-coded servo frame represents "0" and each 1-coded servo frame represents "1".

Index Geometry: Both index patterns are recorded on all servo tracks and spaced evenly.

--Servo Timing Signals (FIG. 3):

Recapitulating the above, workers will perceive that each of the track groups (zones) is made up of "quad" encoded servo tracks, each preceded by one of four kinds of servo bands: ST-0, ST-1, ST-3, ST-4, as indicated in FIG. 3. These are repeated radially, in order, across the zone (thus: ST-0, ST-1, ST-2, ST-3, ST-3, ST-0, ST-1, etc.). Four exemplary bands, 1.6758 us long (at 3600 rpm), are indicated in FIG. 3. Each band comprises six timing points. The tracks are juxtaposed (e.g., 1.24 mils wide, radially, -- for head-gap which is about 2.0 mils wide and is intended to "straddle" track centers -- thus, spanning a nominal 1.0 mils (or about 80% of each (of two adjacent) tracks.)

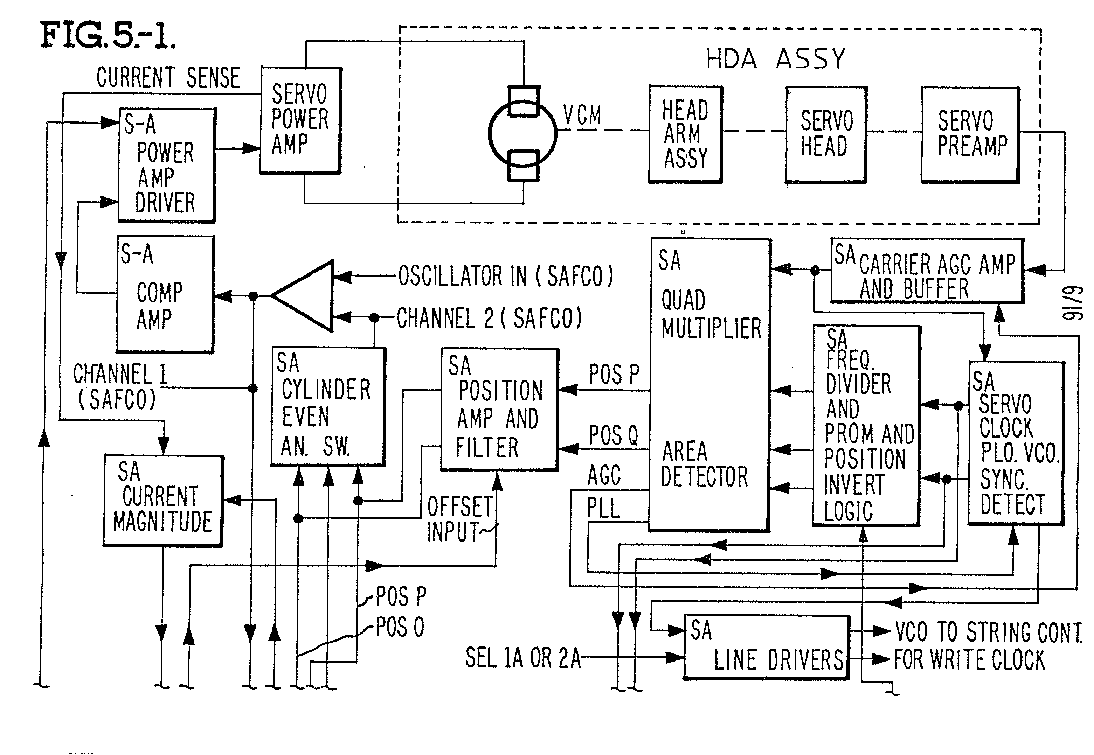

For all four bands, (ST-0, etc.), it will be noted that the pulse patterns are identical in respect of timing information (see initial sync pulses $S_0$, $S_1$, $S_2$; then re-sync or "padding" pulses $S_3$, $S_4$, $S_5$, interspersed with four position pulses $P_0$, $P_1$, $P_2$, $P_3$). This is shown in simplified form in FIG. 4 where, for a given (zone) coding, the decoded position pulses are simplistically represented in 1/0 form.

Such a pattern will be seen as "protecting" (i.e., isolating and trimming) position pulses on both sides by like ("padding" or sync) timing pulses -- preventing position pulses from interfering with one another. As a result, the demodulated signal can define track centerline very precisely. A $90^o$ phase separation-time/space between "primary" and "quad." position signals can be obtained by following sequence $P_0$, $P_1$, $P_2$, $P_3$; a very linear relation is kept between position transition space (distance head travels) and the demodulated position signal. Workers will especially appreciate the enhanced linearity (note: thin film heads tend to give a position pulse output with an overshooting "tail"; this is minimized where they are so terminated by a "padding" pulse).

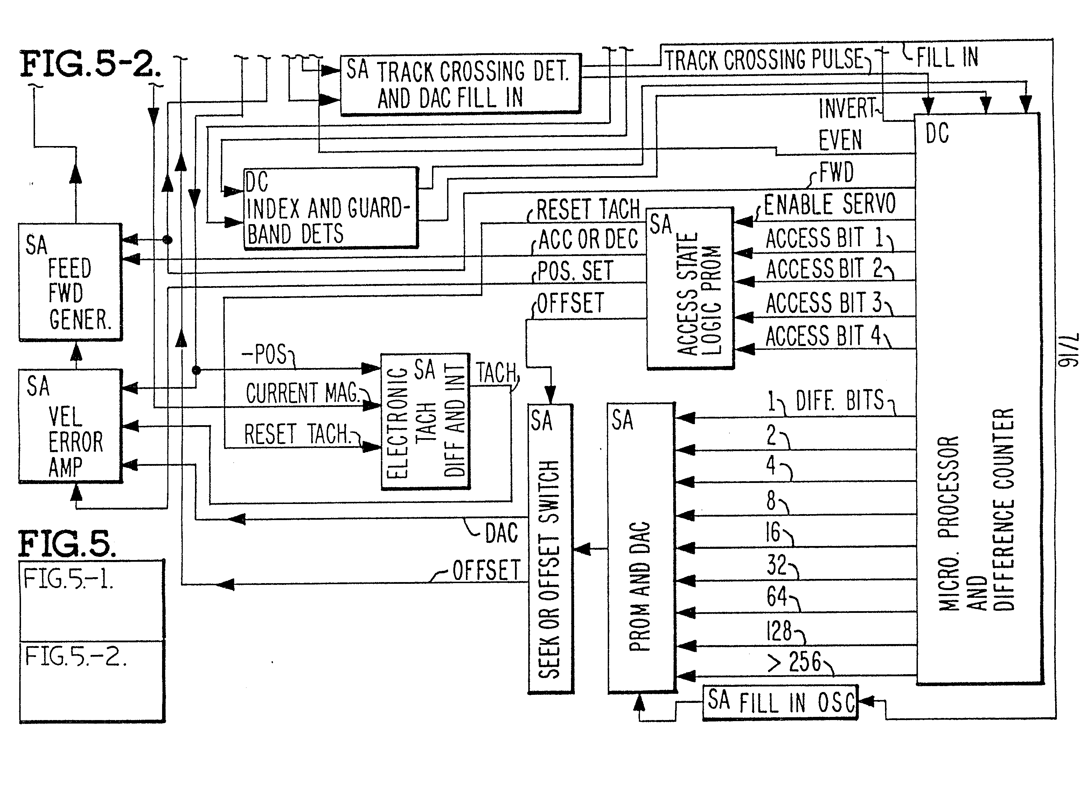

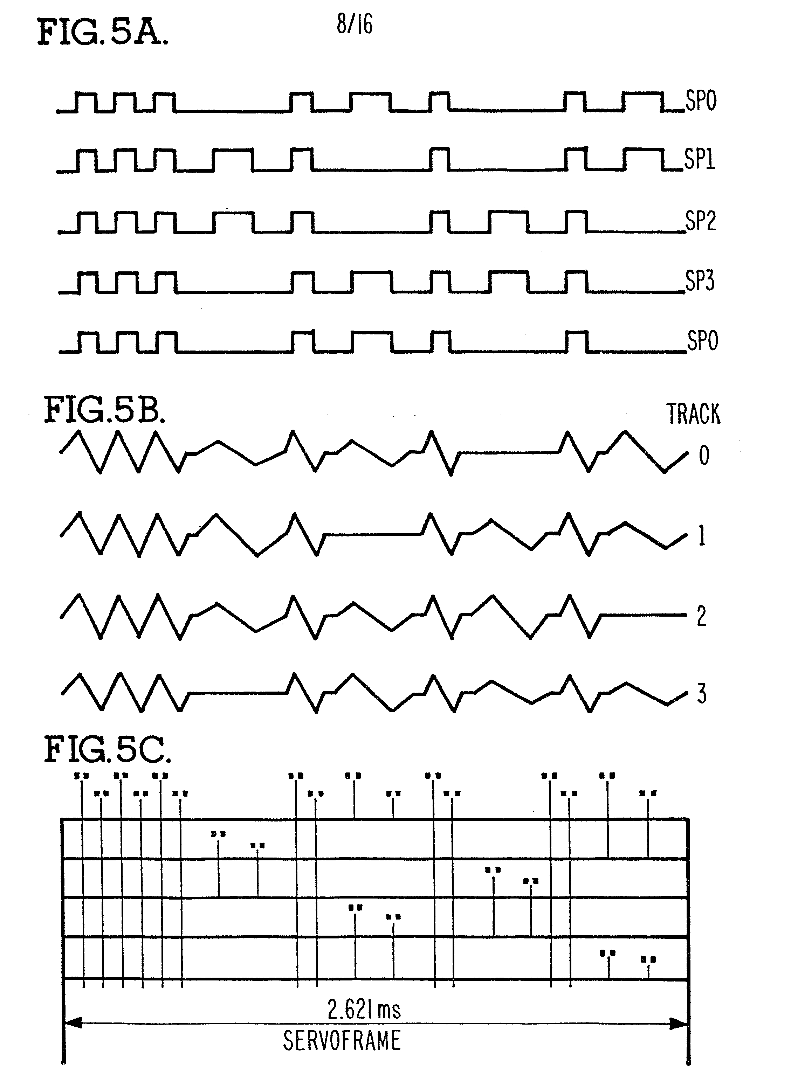

--Servo, generally (FIG. 5):

FIG. 5 is a block diagram of a disk drive servo system of the type contemplated here.

0141499

Preferably, the system uses two independent actuators per HDA. Each actuator has its own set of read/write logic with separate power inputs, and each actuator is microprocessor controlled. The microprocessor decodes and executes various servo/seek routines. It determines the cylinder required by the system and seeks to that cylinder. The microprocessor monitors control of various servo signals to ensure proper operation.

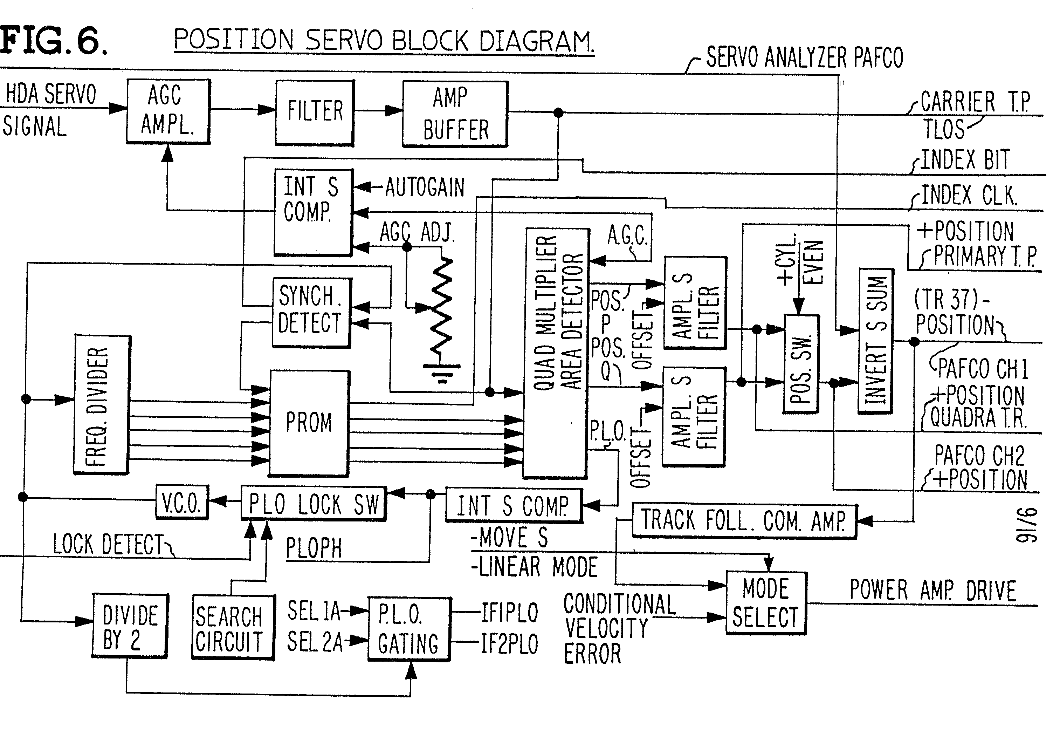

The "Position Servo" aspect of the servo system is indicated in the block diagram of FIG. 6, featuring decoding means for the "primary position signal" and the related "quad. position signal", as well as a track-following servo loop.

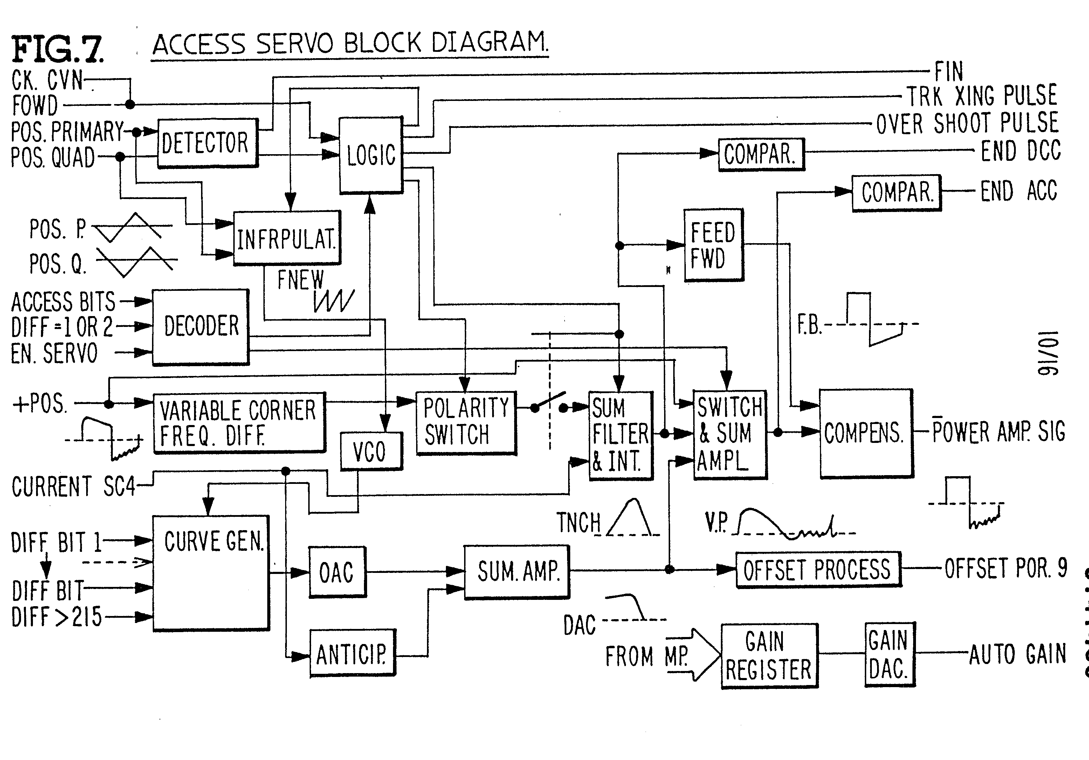

The "Access Servo" aspect of the servo system is indicated in the block diagram of FIG. 7. "Access" begins by moving the actuator (heads) to the required "cylinder" (tracks) upon command issued by the microprocessor. The "length" of the seek is loaded from the difference counter on the DAC (FIG. 7). This access servo makes use of the "optimum time control" theory (bang-bang control system). The microprocessor controls the access servo through "access bits", enablement and direction signals.

The access servo "reports" to the microprocessor an "end accelerate" signal, an "end decelerate" signal, and "track crossing" pulses (to decrement the difference counter).

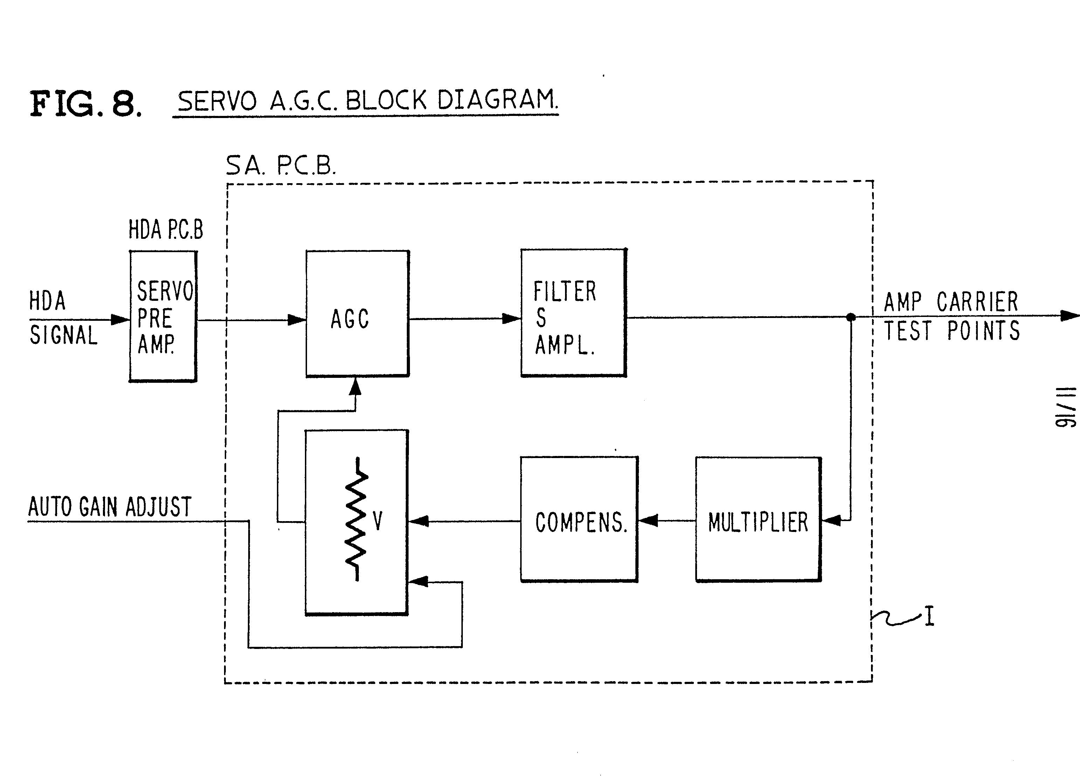

The Servo AGC Loop (automatic gain control) aspects of the system are indicated in the block diagram of FIG. 8.

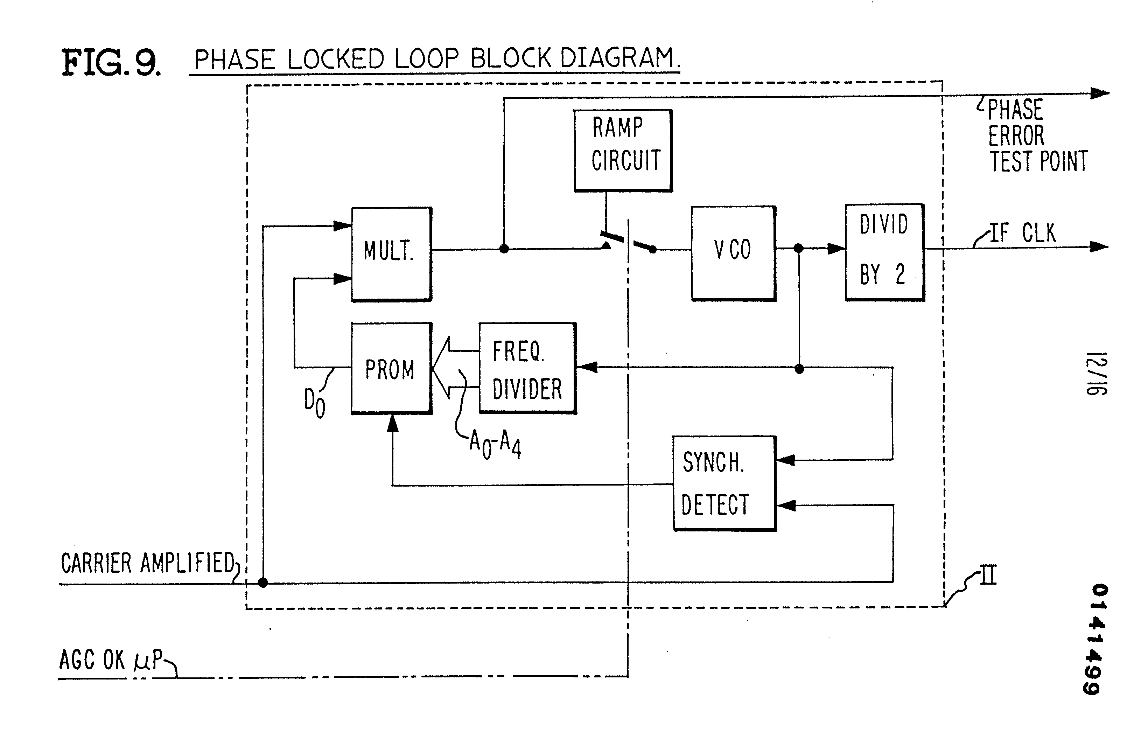

The Phase Locked Loop (PLL) aspects of the system are indicated in the block diagram of FIG. 9.

One can recapitulate the general servo control loop in somewhat more particular fashion than FIG. 1A. Thus, workers may assume an actuator control unit ACT (for a given servo disk surface D-SF, being coupled to related data disks) as operating to feed position information to a converter stage (Pos Trans) which in turn feeds a velocity decoder stage, responsively issuing velocity signals $S_v$ and a track following (compare) stage, issuing "offset" signals $S_p$.

Position signals $S_x$ are also fed to the microprocessor MP for development of velocity control (reference) signals $V_{vr}$ from a curve generator stage. A summing means V.E. receives these reference signals $S_{vr}$ and compares them with the actual velocity information $S_v$ and responsively issues accelerate/decelerate commands Sa in a well-known manner to control the actuator ACT. In time-phased fashion, a switch unit $SW_o$ presents the offset and velocity signals to actuator unit ACT via a related amplifier stage.

--"Track-offset"; servo adjustment:

One of the major causes of "data error" in disk files is "track interference", i.e., read-back data from one track picking up "noise" from data signals written in an adjacent track. Such interference is unlikely however if the dimension of the head gap Lg (plus fringing flux) is less than track pitch.

The head-gap width dimension is determined by "flying-height", "bit density" and required read-back signal amplitude (to achieve the prescribed signal-to-noise ratio). Track pitch is determined by the required storage capacity of the disk (file) in light of the

0141499

available net space on the disk, after allowing for enough guard-band area (to insure HDA safety, given prescribed crash-stop provisions).

For maximum storage capacity, given a prescribed head-gap dimension, one should minimize track pitch. The tolerance on track pitch is set by such factors as:

- Distortion on the input servo signal, introduced by electronic component tolerance (can cause an offset on odd tracks relative to even tracks);

- Servo-writer positioning system tolerances.

- "Thermal offset".

- "D.C. offset", introduced by electronic operational amplifier.

To minimize the effect of such factors, the following microprocessor-based method is here presented, whereby one may automatically correct for errors in track spacing and, accordingly, determine a responsive adjustment in servo gain.

--Offset adjustment method (FIGS. 10-13):

The following assumes the carriage is moving with constant speed $V_O$; and that A is the amplitude of the "position signal", measured base to peak.

A decoded track center is determined from the zero crossings of both the "primary position signal" and "quadrature position signal" (see FIGS. 3 and 10).

From FIG. 10:

If the tracks are spaced equally, then
Spacing $S_1 = S_2 = S_3 = S_4 = S_{av}$;
also, incremental times:

$$\Delta t_1 = \Delta t_2 = \Delta t_3 = \Delta t_4 = \Delta t_{av}$$

But, suppose tracks 1, 2, 3 are offset by distances:
$off_1$, $off_2$, $off_3$, respectively

Then:

$$\left. \begin{array}{l} \text{"off 1"} \propto (\Delta t_{av} - \Delta t_1) \\[2mm] \text{"off 2"} \propto (2\Delta t_{av} - \Delta t_1 - \Delta t_2) \\[2mm] \text{"off 3"} \propto (3\Delta t_{av} - \Delta t_1 - \Delta t_2 - \Delta t_3) \end{array} \right\} I$$

Calculating the offset as percentage of the position signal track in volts:

$$\left. \begin{array}{l} \text{Spacing Offset 1} = \dfrac{\Delta t_{av} - \Delta t_1}{\Delta_{av}} \; A \quad \text{(distance)} \\[4mm] \text{Offset 2} = \dfrac{2\Delta t_{av} - \Delta t_1 - \Delta t_2}{\Delta_{av}} \; A \\[4mm] \text{Offset 3} = \dfrac{3\Delta t_{av} - \Delta t_1 - \Delta t_2 - \Delta t_3}{\Delta_{av}} \; A \\[4mm] \text{and } \Delta t_{av} = \dfrac{\Delta t_1 + \Delta t_2 + \Delta t_3 + \Delta t_4}{4} \end{array} \right\} II$$

$$\left. \begin{array}{l} A = \text{track-pitch} \end{array} \right.$$

"Coast Velocity" $V_o = \dfrac{A}{\Delta t_{av}}$     for G servo gain —— III

For a certain Servo Gain G

$$G \propto V_o$$
$$G \propto \dfrac{1}{\Delta t_{av}}$$        —— IV

--Implementation:

After "sequence-up", or when required, a servo microprocessor is directed to the "servo-calibration" routine.

"Servo-calibration routine"

- Coast (moved with constant speed)
- Measure $\Delta t_1$, $\Delta t_2$, $\Delta t_3$, $\Delta t_4$ while crossing tracks 0, 1, 2, 3, 4
- Calculate $\Delta t_{av}$
- Correct the servo gain by loading the gain DAC to $\Delta t_{av-o} - \Delta t_{av}$

$$\Delta t_{av} = \Delta t_{av-o}$$

Calculate Offset as:

$$\text{Offset 1} = \frac{t_{av} - t_1}{\Delta t_{av}} \quad \text{A.K.}$$

$$\text{Offset 2} = \frac{\Delta t_{av} - \Delta t_1 - \Delta t_2}{\Delta t_{av}} \quad \text{A.K.}$$

$$\text{Offset 3} = \frac{\Delta t_{av} - \Delta t_1 - \Delta t_2 - \Delta t_3}{\Delta t_{av}} \quad \text{A.K.}$$

         V

-- where K = offset scale

Store Offset 1, Offset 2, Offset 3 - Calculate Offset for Zones 1, 2, 3, 4

Now, when "seek-to-cylinder" is involved [servo moves head(s) to "seek" target track(s), as workers understand], the servo-microprocessor will load the "offset DAC" (D/A Conv'r in analog form) with the offset value so developed for this cylinder and stored in memory [i.e., as outlined below, and according to this feature, this need only be one of twelve (12) values,: offset 1, offset 2 or offset 3 for any of the four (4) data-track zones].

--Technique for hd-postion offset adjustment:

Thus, assuming such a "Quad" servo code plus thin film R/W head etc., one initially:

i. determines the three rough-offsets (in terms of time) and so arrives at an average-offset-time $\Delta t_{av}$ (see Equ. I).

ii. this time $\Delta t_{av}$ is related to velocity and Gain, as workers well know (Equ. II, III) and so an average servo-gain-adjust value $\Delta G_{av}$ is determined.

iii. from this, a more precise offset-distance may be determined for intervals $S_2$, $S_3$, $S_4$; i.e., $\Delta S_1$, $\Delta S_2$, $\Delta S_3$ ($S_i$ assumed as the "reference", thus $\Delta S_i = 0$).

iv. but, according to the Quad code, all four (4) servo-codes (see FIG. 3; and related description) are repeated across each given "zone" (track group -- here Zones I, II, III, IV, or $z^n$ zones).

Thus, values $\Delta S_1$, $\Delta S_2$, $\Delta S_3$ may be assumed (are assumed) as constant across this zone.

For instance, a "seek excursion: to track #4 will involve the same $\Delta S$ as to track #0: i.e., $\Delta S_1$, or zero by definition. Likewise for tracks 8, 16, etc., all across Zone #I (here 256 tracks in all).

Likewise, a "seek excursion" to track #5 is assumed to involve the same $\Delta S$ as to track #1 (hence, the same adjustment $\Delta S_2$); and likewise for tracks #9, #13, #17, etc., across Zone I.

v. accordingly, each binary track-address code may be provided with a pair of "offset bits" [00, 01, 10, 11] indicating the four offset distance corrections ($\Delta S_1$, $\Delta S_2$, $\Delta S_3$ and $\Delta S_4$) and these be automatically derived via a known "table look-up" technique (providing four respective offset-servo signals $S_1$, $S_2$, $S_3$, $S_4$).

Preferably, these are rendered in digital increments to most conveniently activate the servo stepper accordingly (e.g., in 5 uin increments, so that $\Delta S = 15$ uin becomes three stepper pulses, $\Delta S = 25$ uin becomes 5 stepper pulses, etc.; with no "hunt-and-seek" necessary).

And, if one wishes to vary the servo position code (e.g., vs "Quad", might use eight-fold code variation, or 16-fold, or other binary ($2^n$) variation), workers will perceive how the track-address and associated table look-up may be adjusted accordingly.

vi. now, we also divide the full set of cylinders (tracks) into four equal zones of 256 tracks each. Thus, the foregoing must be repeated for each of the other zones.

That is, a separate determination of offsets, times, gain and ave. gain (steps i, ii, iii above) must be carried out, and the related offset-distances ($\Delta S_1$, $\Delta S_2$, $\Delta S_3$, $\Delta S_4$) found for Zone II, these being stored for table look-up, etc.

And, likewise for $\Delta S_1$, $\Delta S_2$, $\Delta S_3$, $\Delta S_4$ across Zone III and across Zone IV.

This will require, for servo-adjustment across all 1024 tracks, a total of sixteen (16) different $\Delta S$ values -- only twelve where $\Delta S_1$ assumed = zero; this amounts to a mere 12, or $2^\eta \times 6$ "adjust-signals" in all.

And, as workers can see; one can accommodate "zone-identification" by dedicating another two (binary) bits in the track-address to this. And, if more zones are desired, another binary combination can be found ($2^\eta$ codes x $2^\eta$ zones less zero-code).

Workers will perceive how very conveniently, and efficiently, the foregoing technique is adapted to binary-coded track-addressing, to stepper-seeking, to saving memory cells (only four address bits and only 12 total servo-adjust values).

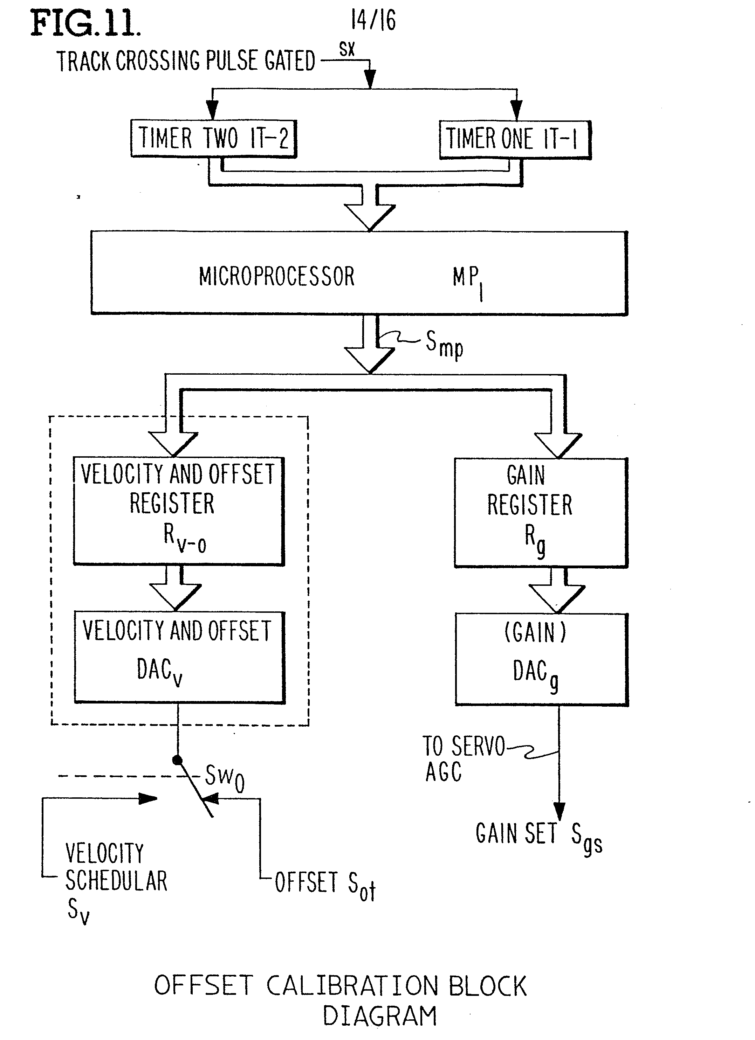

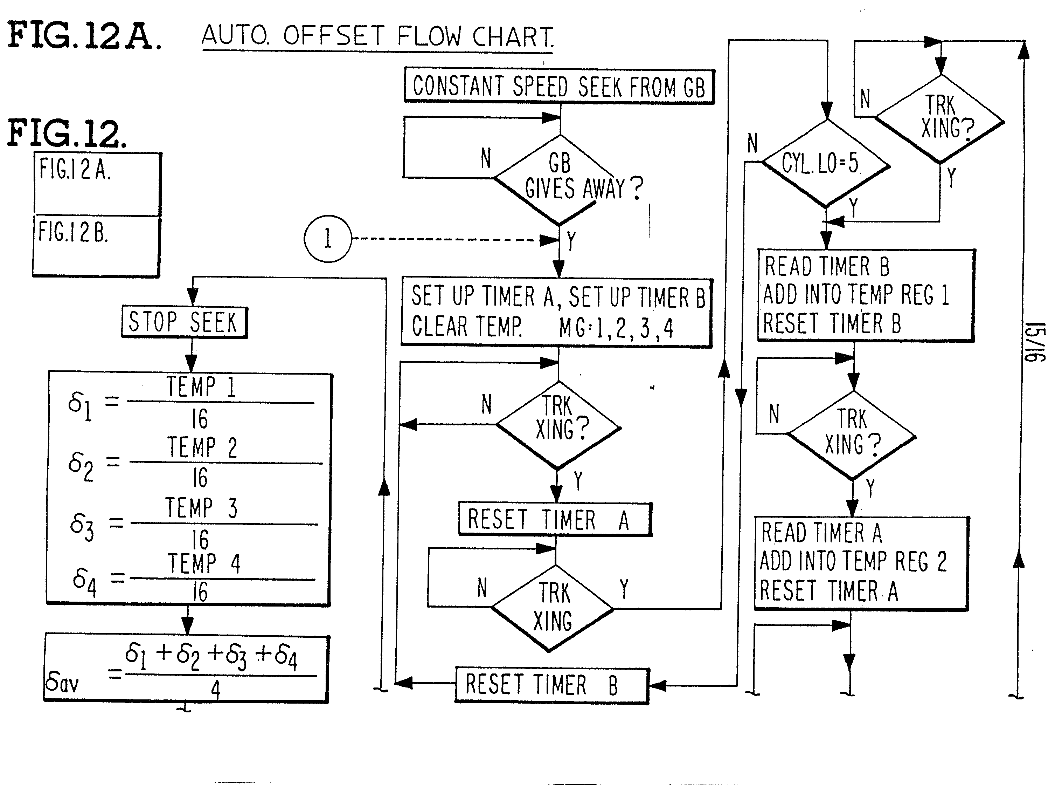

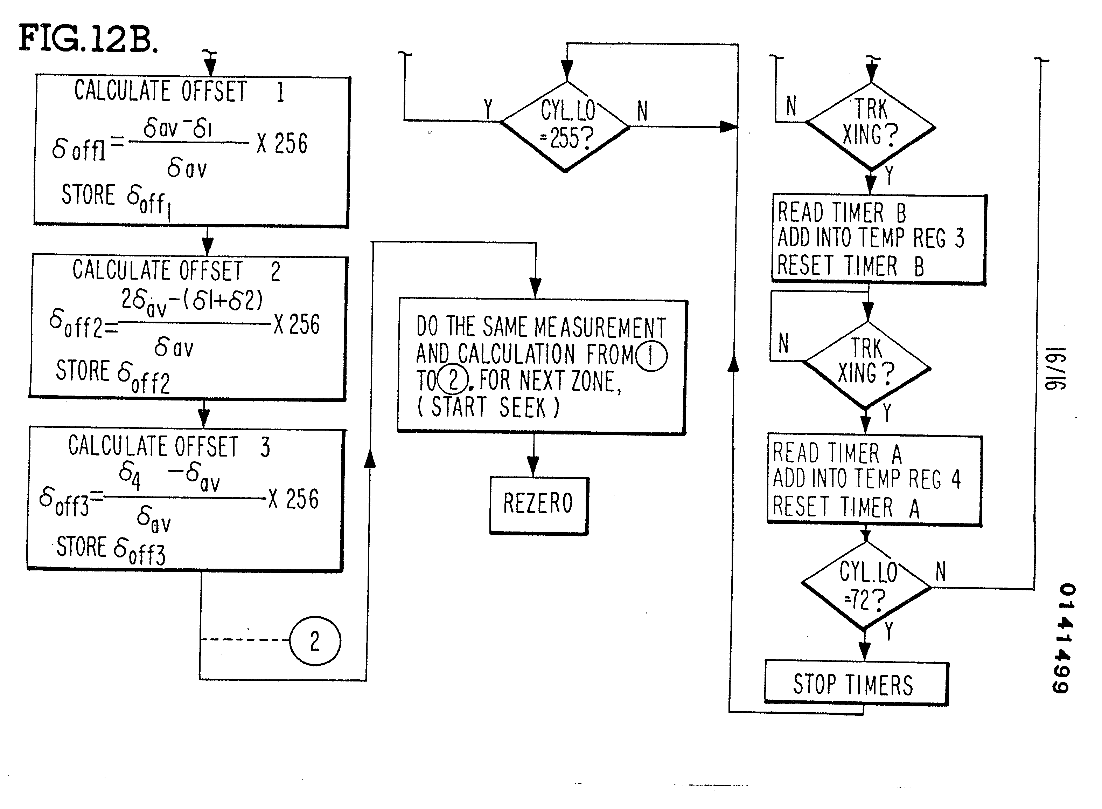

--"Offset calibration" system (FIGS. 11, 12):

FIG. 11 indicates a preferred "offset calibration" system, in block diagram form, for implementing the described method. Thus, it will be understood that the mentioned "track crossing pulses" $s_x$ (derived as above, as understood by workers) are fed to a programmable microprocessor stage $MP_1$, including a pair of input timer stages $IT_1$, $IT_2$ (e.g., preferably, $MP_1$ can "read" the contents of $IT_1$, while operating on $IT_2$, and vice versa).

$MP_1$ will be understood as bi-stable, and as requiring that it be "loaded" initially, as workers will appreciate. The $MP_1$ output Smp is fed to a related gain stage (gain register Rg, feeding D/A converter DACg) to develop the desired analog "servo-gain-adjust" signal Sg-s ("gain set" to servo AGC as workers appreciate). Signals Smp are also fed to a velocity/offset stage [comprising a bi-part velocity/offset register $R_{vo}$ -- a curve-generating stage adopted to indicate "offset" values in "on track" (offset) mode and velocity values in "seek" mode -- feeding a velocity/offset D/A converter $DAC_o$] to generate two kinds of output signals, Sof and $S_v$, which may be fed, via switch $Sw_o$, to an offset stage (for signals Sof) or a velocity schedule (generator) stage (for signals $S_v$) as indicated. ($R_{vo}$ may be a PROM-Look-Up Table, loaded with conversions to velocity, for output in "SEEK" mode, and with conversions to "offset" values for output in "offset" mode.) Switch $Sw_o$ is thus, time-phased for this, to be operated according to signals reflecting either "on track" mode or "seek" mode.

FIG. 12 is a related Microprocessor Flow Chart.

FIG. 5 (described above) indicates how this "calibration system" can be integrated into the overall servo scheme.

0141499

- 22 -

--<u>Features of Method</u>:

The foregoing method has several features of operation and advantage that will impress workers in the art. One is that it provides a very convenient way to automatically compensate for variations in track spacing (e.g., and to adjust AGC accordingly -- something very important when using such a "Quad" servo position code which relies upon precise track-spacing). It allows one to do this before "Read" is invoked (determining track-centers precisely, keeping velocity constant).

One may, conveniently, use an Access processor to adjust servo gain, and also to provide offset values in a system which may also give velocity values (cf. two via single output channel, time-shared with switch as above indicated -- See FIG. 11).

--<u>Conclusion</u>:

It will be understood that the preferred embodiments described herein are only exemplary, and that the invention is capable of many modifications and variations in construction, arrangement and use without departing from the spirit of the invention.

Further modifications of the invention are also possible. For example, the means and methods disclosed herein are also applicable to other related servo systems and the like. Also, the present invention is applicable for positioning with other forms of recording and/or reproducing, whether on disks or otherwise -- e.g., with media on which data is recorded and reproduced optically.

The above examples of possible variations of the present invention are merely illustrative. Accordingly, the present invention is to be considered as including
all possible modifications and variations coming within
the scope of the invention as defined by the appended
claims.

What is claimed is:

1.  A method of deriving and using offset values for an array of $\eta$ servo position tracks deployed across a disk servo-surface; comprising the steps of:

a.  arranging the servo position data as $N_T$ variations of a prescribed servo position code so that $\eta/N_T$ bands result across the entire servo track array;

b.  subdividing the servo tracks array into Z zones;

c.  scanning the adjacent tracks of at least one band in a given zone to derive average-offset value "$off_{av}$";

d.  rescanning these $N_T$ tracks to ascertain precise offset for each track in the band, using one as a reference; and computing a gain variation $\Delta G$ for each track as a result;

e.  storing these offset and $\Delta G$ values for each of the $N_T$ tracks in this zone;

f.  determining "offset" and average gain $G_{av}$ values for the $N_T$ tracks in each of the other zones, and likewise storing these

g.  whereby a Look-Up Table of "offset" and "$\Delta G$" values is generated, with individual such values for each of the $N_T$ tracks in each zone, so that $(N_T - 1) \times Z$ total values are so derived and stored; and

h.  using this Table for adjusting gain and offset as a function of track location in the servo control.

2.      A servomechanism for positioning a head relative to a rotary informational data storage medium, said servomechanism comprising:

controller means;

a position transducer mechanically coupled to said head and operable to provide a plurality of cyclic, staggered, "head-position-indicating" signals $S_{h-p}$;

select means adapted to receive said position-indicating signals $S_{h-p}$ and, responsive to commands from said controller means, to select one of the signals as the feedback signal for said servomechanism to position said head in any selectable one of a plurality of "rest" positions;

position detect means adapted to receive some or all of said signals $S_{h-p}$ and operable to indicate to said controller means when said head is in each of a plurality of "test" positions, each intermediate a pair of adjacent "rest" positions; and

summing junction means coupled to receive a position offset signal $S_O$ from said controller means for moving said head from the selected one of said "rest" positions, where,

said controller means is operable to select each of said position-indicating signals in turn as said feedback signal and to apply said offset signal and monitor said indication by said detect means to determine in each case the amount of offset $\Delta S$ required to move said head from its selected "rest" position to an adjacent "test" position, and whereafter

said controller is operable to select said position-indicating signals and apply a corrective offset signal to apportion the total amount of offset so discovered among a plurality of equispaced operating positions.


3. A servomechanism according to claim 2 wherein said plurality of position indicating signals comprises four position-indicating signals as follows: a first position-indicating signal p-1, a second position-indicating signal p-2 nominally in phase opposition with p-1, a third position-indicating signal p-3; a fourth position-indicating signal p-4 nominally in phase opposition with p-3; said third and said fourth signals also being nominally in collective quadrature ($\propto$C Quad) with said first and said second signals, i.e., p-3, p-4 $\propto$ Quad p-1, p-2; and wherein a first of said plurality of "test" positions is that position where p-1 = p-3, i.e., said first signal is equal to said third signal; where a second "test" position is where p-1 = p-4, i.e., said first signal is equal to said fourth signal; where a third "test" position is where p-2 = p-3, ie., said second signal is equal to said third signal; and where a fourth "test" position is where p-2 = p-4, i.e., said second signal equals said fourth signal.

4. A method of deriving and using offset values for an array of $\eta$ servo position tracks deployed across a disk servo-surface; comprising the steps of:

    a. arranging the servo position data as $N_v$ variations of a prescribed servo position code so that $\eta/N_v$ bands result across the entire servo track array;

    b. subdividing the servo track array into Z zones;

    c. scanning the adjacent tracks of at least one band in a given zone to derive average-offset;

    d. rescanning these $N_v$ tracks to ascertain precise offset for each track in the band, using one as a reference; and determining a servo control factor variation $\Delta F$ for each track as a result;

    e. storing these offset and $\Delta F$ values for each of the $N_v$ tracks in this zone;

    f. determining "offset" and $\Delta F_{av}$ values for the $N_v$ tracks in each of the other zones, and so storing these

    g. whereby a Look-Up Table of "offset" and "$\Delta F$" values is generated, one pair of such values for each of the $N_v$ tracks in each zone, i.e., $(N_v - 1) \times Z$ total values stored;

    h. using this Table for adjusting offset and one or more control factors as a function of track position in servo control.

5.     A method of deriving and using offset values for an array of $\eta$ servo position tracks deployed across a disk servo-surface; comprising the steps of:

a.  arranging the servo position data as $N_\nu$ variations of a prescribed servo position code so that $\eta/N_\nu$ bands result across the entire servo track array;

b.  subdividing the servo track array into Z zones;

c.  scanning the adjacent tracks of at least one band in a given zone to derive average-offset;

d.  rescanning these $N_\nu$ tracks to ascertain precise offset for each track in the band, using one as a reference;

e.  storing these offset values for each of the $N_\nu$ tracks in this zone;

f.  determining "offset" values for the $N_\nu$ tracks in each of the other zones, and so storing these,

g.  whereby a Look-Up Table of "offset" values is generated, one for each of the $N_\nu$ tracks in each zone, i.e., $(N_\nu - 1) \times Z$ total values stored;

h.  using this Table for adjusting offset as a function of track position in servo control.

6.      Disk file servo control apparatus as recited
in method claim 1.

7.      Disk file servo control apparatus as recited
in method claim 3.

8.      Disk file servo control apparatus as recited
in method claim 4.

9.      In a method of determining servo position data
wherein each data channel comprises one of several versions
of a prescribed position code rendered in several position
signals, the improvement wherein:
The position signals are each deployed to follow and
        to be terminated by like distinct timing sequences.

10.     The combination recited in claim 9 wherein a
"Quad" code applies.

11.     The combination recited in claim 10 wherein the
timing sequences are identical, being versions of initial
synch pulses.

12      The combination recited in claim 11 wherein the
track center is arranged to be determined by balancing
signals read from radially-adjacent tracks.

13.     The combination recited in claim 12 wherein the
tracks abut and are transduced by a thin film head intended
to span adjacent tracks to render this balancing.

14.     The combination recited in claim 13 wherein the
balancing is intended to be equal.

-30 -

15.    The combination recited in claim 14 wherein all
timing sequences are relatively identical "padding"
pulses adapted to minimize "tail-overshoot".


16.    The combination as recited in claim 15 wherein
the balancing is intended to be equal.


17.    The combination as recited in claim 16 wherein
the servo position data is written on a servo band portion
of at least one disk co-mounted in a disk stack on a
common actuator wherein all heads are controlled by this
servo data.


18.    The combination as recited in claim 17 wherein
the servo position data comprises "Primary" and "Quad"
position signals.

FIG.1.  1/16  0141499

S-R  PULLEY

DF

$A_1$

(B) SIDE

13 | 14
SERVO | 12

$D-SF_1$

11 | 10
9 | 8

7 | 6
5 | 4

3 | 2
1 | 0

$\underline{C_1}$

(A) SIDE

1 | 0
3 | 2

5 | 4
7 | 6

9 | 8
11 | 10

DSF-2

SERVO | 12
13 | 14

$\underline{C_2}$

$A_2$

# FIG.1A.

# FIG.4.

| $S_0$ | $S_1$ | $S_2$ | $P_1$ | $S_3$ | $P_2$ | $S_4$ | $P_3$ | $S_5$ | $P_4$ | BAND |
|---|---|---|---|---|---|---|---|---|---|---|
| | | | | 0 | 1 | | 0 | | 1 | ST-0 |
| | | | | 1 | 0 | | 0 | | 1 | ST-1 |
| | | | | 1 | 0 | | 1 | | 0 | ST-2 |
| | | | | 0 | 1 | | 1 | | 0 | ST-3 |

0141499

# FIG.2.

3/16
HDA ZONES CHART

CODE

| | | |
|---|---|---|
| SP0 | | GUARDBAND 2 |
| SP1 | GB2 | |
| SP2 | 11100 | |
| SP3 | | |
| SP0 | | |
| SP1 | GB1 | GUARDBAND 1 |
| SP2 | 10101 | |
| SP3 | | |
| SP3 | | |
| SP0 | | |
| SP0 | | |
| SP0 | | REZEROBAND |
| SP0 | | |
| SP0 | | |
| SP1 | | |
| SP2 | DATA | |
| SP3 | 00000 | |
| SP0 | | |
| | | DATA BAND |
| SP3 | | |
| SP0 | | |
| SP1 | ID | INNER GUARDBAND |
| SP2 | 11010 | ID AREA |
| SP3 | | |
| SP2 | | |

DATA CYLINDERS

DATA { 0
TRACKS { 884

SPARE — 885
CE. CYL + 886

IN ALL BANDS - EVEN INDEX, ODD INDEX
10110        10011

FIG.3A. SERVO TIMING 4/16

0141499

FIG.3.
FIG.3A. | FIG.3B.

# FIG. 3B.

SERVO TIMING  5/16

Pod          Pod

17 18 19 20 21 22 23 24 25 26 27 28 29 30 31 32

ST-0

ST-1

ST-2

ST-3

167.578 IIS AT 3600 RPM

< S N        S N        S S    N N    SP0
                                      SP1
                                      SP2
                                      SP3

P₁    S₄    P₂    S₅    P₃

SP0

SP1

SP2

SP3

SP0

SP1

SP2

SP3

# FIG.5.-1.

CURRENT SENSE

HDA ASSY

SERVO POWER AMP

S-A POWER AMP DRIVER

VCM

HEAD ARM ASSY

SERVO HEAD

SERVO PREAMP

S-A COMP AMP

OSCILLATOR IN ( SAFCO )

CHANNEL 2 ( SAFCO )

SA CARRIER AGC AMP AND BUFFER

SA QUAD MULTIPLIER

AREA DETECTOR

SA FREQ. DIVIDER AND PROM AND POSITION INVERT LOGIC

SA SERVO CLOCK PLO. VCO. SYNC. DETECT

CHANNEL 1 (SAFCO)

SA CYLINDER EVEN AN. SW.

SA POSITION AMP AND FILTER

POS P

POS Q

AGC

PLL

SA CURRENT MAGNITUDE

OFFSET INPUT

POS P
POS O

SA LINE DRIVERS

SEL 1A OR 2A

VCO TO STRING CONT.
FOR WRITE CLOCK

91/6

0141499

# FIG. 5-2.

MICRO. PROCESSOR
AND
DIFFERENCE COUNTER

DC

TRACK CROSSING PULSE
FILL IN
INVERT
EVEN
FWD
ENABLE SERVO
ACCESS BIT 1
ACCESS BIT 2
ACCESS BIT 3
ACCESS BIT 4
DIFF. BITS
1
2
4
8
16
32
64
128
> 256
SA FILL IN OSC

ACCESS STATE
LOGIC PROM
SA
RESET TACH
ACC OR DEC
POS. SET
OFFSET

SA TRACK CROSSING DET.
AND DAC FILL IN

DC
INDEX AND GUARD-
BAND DETS

SA
PROM AND DAC

SA
SEEK OR OFFSET SWITCH

DAC
OFFSET

ELECTRONIC
TACH
DIFF AND INT
SA
TACH
POS
CURRENT MAG.
RESET TACH.

SA
FEED
FWD
GENER.

SA
VEL
ERROR
AMP

# FIG. 5.

| FIG. 5-1. |
|-----------|
| FIG. 5-2. |

0141499

# FIG.5A.

SP0
SP1
SP2
SP3
SP0

# FIG.5B.

TRACK

0
1
2
3

# FIG.5C.

2.621 ms

SERVOFRAME

# FIG.6. POSITION SERVO BLOCK DIAGRAM.

# FIG.7. ACCESS SERVO BLOCK DIAGRAM.

# FIG. 8. SERVO A.G.C. BLOCK DIAGRAM.

# FIG.9. PHASE LOCKED LOOP BLOCK DIAGRAM.

0141499

# FIG. 10. QUADRATURE SYSTEM CALIBRATION.

FORWARD
→
CARRIAGE MOVING WITH CONSTANT SPEED

QUADRATURE POSITION SIGNAL

PRIMARY POSITION SIGNAL

AMPLITUDE (v)

$A(v)$

$(t_0)$

TIME
$(t_0)$

$t_0$  $t_1$  $t_2$  $t_3$  $t_4$

TRK.0  TRK.1  TRK.2  TRK.3  TRK.4

$\Delta T_1 \propto S_1$   $\Delta T_2 \propto S_2$   $\Delta T_3 \propto S_3$   $\Delta T_4 \propto S_4$

eg $\Delta T_1 = T_1 - T_0$
   $\Delta T_2 = T_2 - T_1$ etc.

0141499

**0141499**

FIG.11.

14/16

TRACK CROSSING PULSE GATED — SX

TIMER TWO IT-2      TIMER ONE IT-1

MICROPROCESSOR      $MP_1$

$S_{mp}$

VELOCITY AND OFFSET REGISTER $R_{v-o}$

GAIN REGISTER $R_g$

VELOCITY AND OFFSET $DAC_v$

(GAIN) $DAC_g$

$Sw_0$

TO SERVO AGC

VELOCITY SCHEDULAR $S_v$

OFFSET $S_{ot}$

GAIN SET $S_{gs}$

OFFSET CALIBRATION BLOCK
DIAGRAM

**FIG. 12A.** AUTO. OFFSET FLOW CHART.

**FIG. 12.**

| FIG.12A. |
|---|
| FIG.12B. |

CONSTANT SPEED SEEK FROM GB

GB GIVES AWAY ?  — N / Y

(1)

STOP SEEK

$$\delta_1 = \dfrac{TEMP\ 1}{16}$$

$$\delta_2 = \dfrac{TEMP\ 2}{16}$$

$$\delta_3 = \dfrac{TEMP\ 3}{16}$$

$$\delta_4 = \dfrac{TEMP\ 4}{16}$$

$$\delta_{av} = \dfrac{\delta_1 + \delta_2 + \delta_3 + \delta_4}{4}$$

SET UP TIMER A, SET UP TIMER B
CLEAR TEMP.    MG·1,2,3,4

TRK XING ?  — N / Y

RESET TIMER A

TRK XING  — N / Y

RESET TIMER B

CYL. LO=5  — N / Y

TRK XING ?  — N / Y

READ TIMER B
ADD INTO TEMP REG 1
RESET TIMER B

TRK XING ?  — N / Y

READ TIMER A
ADD INTO TEMP REG 2
RESET TIMER A

15/16

0141499

# FIG.12B.

CALCULATE OFFSET  1

$$\delta_{off1} = \frac{\delta_{av} - \delta_1}{\delta_{av}} \times 256$$

STORE $\delta_{off1}$

CALCULATE OFFSET  2

$$\delta_{off2} = \frac{2\delta_{av} - (\delta_1 + \delta_2)}{\delta_{av}} \times 256$$

STORE $\delta_{off2}$

CALCULATE OFFSET  3

$$\delta_{off3} = \frac{\delta_4 - \delta_{av}}{\delta_{av}} \times 256$$

STORE $\delta_{off3}$

── ② ──

Y ← CYL.LO =255? → N

DO THE SAME MEASUREMENT AND CALCULATION FROM ① TO ②. FOR NEXT ZONE, ( START SEEK )

REZERO

N ← TRK XING? → Y

READ TIMER B
ADD INTO TEMP REG 3
RESET TIMER B

N ← TRK XING? → Y

READ TIMER A
ADD INTO TEMP REG 4
RESET TIMER A

CYL.LO =72? → N

Y

STOP TIMERS

16/16

0141499

**European Patent Office**

**EUROPEAN SEARCH REPORT**

| | DOCUMENTS CONSIDERED TO BE RELEVANT | | EP 84305943.7 |
|---|---|---|---|
| Category | Citation of document with indication, where appropriate, of relevant passages | Relevant to claim | CLASSIFICATION OF THE APPLICATION (Int. Cl.4) |
| A | US - A - 4 400 747 (SIVERLING)<br>* Abstract; column 3, paragraph 1 * | 1-18 | G 11 B 21/10<br>G 11 B 5/56 |
| A | US - A - 4 286 296 (CUNNINGHAM)<br>* Fig.; column 2, line 67 - column 3, line 30 * | 1-18 | |
| A | US - A - 4 115 823 (COMMANDER)<br>* Fig.; column 3, line 31 - column 5, line 7 * | 1-18 | |
| A | US - A - 4 149 201 (CARD)<br>* Abstract; fig. 2B * | | |
| A | IBM JOURNAL OF RESEARCH AND DEVELOPMENT, vol. 18, no. 6, November 1974, New York<br>R.K. OSWALD "Design of a Disk File Head-Position Servo" pages 506-512<br>* Fig. 3,4 * | | **TECHNICAL FIELDS SEARCHED (Int. Cl.4)**<br><br>G 11 B |

The present search report has been drawn up for all claims

| Place of search | Date of completion of the search | Examiner |
|---|---|---|
| VIENNA | 29-11-1984 | HEINICH |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82